# EUROPÄISCHE PATENTANMELDUNG

(11) **EP 4 198 241 A1**
(43) Veröffentlichungstag der Anmeldung: **21.06.2023**
(21) Anmeldenummer: 21214732.6
(22) Anmeldetag: 15.12.2021
(51) Int. Cl.: E06B 1/70, F16B 3/00, F16B 5/06, F16B 1/00

(54) **NIEDERHALTEANORDNUNG UND FENSTERZARGE**

(71) Anmelder: DAW SE, 64372 Ober-Ramstadt (DE)
(72) Erfinder: Schmucker, Sebastian, 64395 Brensbach (DE)
(74) Vertreter: Metten, Karl-Heinz

(57) **Zusammenfassung**

Bei einer Niederhalteanordnung (1) zum Sichern einer Fensterbank (3), insbesondere einer Blechfensterbank, einer Steinfensterbank oder dergleichen, an einem Fensterbanklager (51) einer Fensterzarge (5) gegen Wind- und/oder Sogbelastung, wobei die Niederhalteanordnung (1) einen ersten, an der Fensterbank (3) fixierbaren oder fixierten Haltepartner (11) und einen zweiten, an der Fensterzarge (5) fixierbaren oder fixierten Haltepartner (21) umfasst, wobei der erste Haltepartner (11) relativ zu dem zweiten Haltepartner (21) beweglich ist, ist vorgesehen, dass der erste Haltepartner (11) an einer flächigen Unterseite (31) der Fensterbank (3) befestig oder befestigbar ist, und/oder der zweite Haltepartner (21) an einer flächigen Oberseite (52) des Fensterbanklagers (51) befestigt oder befestigbar ist.

## Beschreibung

Die Erfindung betrifft eine Niederhalteanordnung zum Sichern einer Fensterbank, insbesondere einer Blechfensterbank oder Steinfensterbank, an einem Fensterbanklager einer Fensterlaibung oder Fensterzarge gegen Wind- und/oder Sogbelastung. Die Erfindung betrifft auch eine Fensterzarge mit einer Niederhalteanordnung.

Für den Einbau von Fenstern in Gebäude sind verschiedene Systeme bekannt. Für einen einfachen, raschen und reversiblen Einbau hat sich zum Beispiel die aus EP 3 854 975 A1 bekannte vorgefertigte Umfassungszarge als besonders gut geeignet herausgestellt. Im Hinblick auf eine reversible Montage hat sich die Befestigung der Fensterbank als problematisch herausgestellt. Bei der bekannten vorgefertigten umfassenden Zarge sind im Bereich des Übergangs zwischen der Laibung und einem darunter angeordneten Gefällekeil oder eine darunter angeordnete wasserdichte Lage der Zarge beidseitig Fensterbankgleitlager angeordnet. Insbesondere bei breiten Fenstern ist es üblich, zusätzlich in einem mittleren Bereich zwischen den gegenüberliegenden Gleitlagern Niederhalter vorzusehen. Die Niederhalter dienen dazu, die Fensterbank zu sichern gegen ein An- oder Abheben durch Wind bzw. Sog.

Allerdings ist es oftmals erforderlich, die Fensterbank nach ihrem Einbau von der Zarge zu lösen. Es hat sich insbesondere im Fertigbau gezeigt, dass vormontierte Fensterbänke, beispielsweise bei der Verladung von Einzelwänden oder während einer späteren Bauphase, beschädigt werden können und dann ausgetauscht werden müssen. Dabei ist es nachteilig, wenn der Ausbau der Fensterbank weitere Schäden, etwa an der zweiten Dichtebene, verursacht. Ferner ist es häufig zur Wartung oder für die Suche nach Fehlern erforderlich, dass die Fensterbank in ausgebaut wird, um die darunter befindliche Lage (Unterfensterbank oder wind- und schlagregendichter-Anschluss) zu überprüfen, beispielsweise falls nach Fertigstellung eines Gebäudes ein ungewollter Wassereintrag im Bereich eines Fensters festgestellt wird, oder falls das Winddichtigkeitskonzept eines Gebäudes sich als fehlerhaft herausstellt. Das Entfernen einer montierten Fensterbank kann außerdem erforderlich sein, falls ein Fenster beispielsweise im Zuge einer Gebäudesanierung ausgetauscht werden soll.

Oftmals ist als Niederhalter ein Haftmittel, wie ein Klebstoff, vorgesehen, um die Unterseite der Fensterbank materialschlüssig mit der Oberseite der wasserdichten Lage oder des Gefällekeils zu verbinden. Infolge der bestimmungsgemäß sehr starken Haftkraft sind solcherart gesicherte Fensterbänke nicht länger zerstörungsfrei rückbaubar. Die Haftmittelverbindung wird üblicherweise durch Gewalteinwirkung demontiert, was häufig Beschädigungen der angrenzenden Dichtebenen, der Putzverkleidung eines Gebäudes, der Laibung oder des Fensters zur Folge haben kann. Beim Rückbau wird meist die Fensterbank wie auch die zweite Dichtebene zerstört.

Alternativ kann für Blech-Fensterbänke als Niederhalter eine sogenannte Windsogverankerung, die auch als Fensterbankhalter bezeichnet wird, zum Einsatz kommen. Fensterbankhalter sind im Wesentlichen L-förmig, mit einem langen vertikalen Schenkel, der an einer Gebäudeaußenwand unter einer Putzschicht sowie gegebenenfalls unter einer WDVS-Schicht befestigt wird, einem horizontalen Ausleger, der von dem Gebäude weg weist, und einem kurzen vertikalen Schenkel zum Ergreifen der Vorderkante der Blech-Fensterbank. Solche Windsogverankerungen erfordern im Vergleich zu dem Haftmittel einen wesentlich höheren Montageaufwand.

Es besteht der Wunsch nach einer Niederhalteanordnung zum Sichern einer Fensterbank, die mit möglichst geringem Kosten- und Personalaufwand sowohl montierbar als auch demontierbar ist.

Es ist eine Aufgabe der Erfindung, die Nachteile des Stands der Technik zu überwinden, insbesondere einen eine Niederhalteranordnung eine Fensterzarge mit einer Niederhalteranordnung bereitzustellen, die einfach zu montieren ist, beschädigungsfrei demontierbar ist und/oder eine wirksame Sicherung für eine Fensterbank gegen ein An- oder Abheben durch Wind oder Sog bereitstellt.

Diese Aufgabe lösen die Gegenstände der unabhängigen Ansprüche.

Demnach ist eine Niederhalteanordnung zum Sichern einer Fensterbank an einem Fensterbanklager einer Fensterzarge gegen Wind- und/oder Sogbelastung vorgesehen. Die Fensterbank kann insbesondere eine Blechfensterbank, eine Steinfensterbank oder dergleichen sein. Die erfindungsgemäße Niederhalteanordnung umfasst einen ersten Haltepartner, der an der Fensterbank fixierbaren oder fixiert ist, und einen zweiten Haltepartner, der an der Fensterzarge fixierbaren oder fixiert ist. Der erste Haltepartner ist relativ zu dem zweiten Haltepartner beweglich. Vorzugsweise ist in einem Niederhaltezustand eine Vertikalbeweglichkeit des ersten Haltepartners (und der damit verbundenen Fensterbank) relativ zu dem zweiten Haltepartner (der an dem Fensterbanklager befestigt ist) gesperrt. Vorzugsweise ist ein Niederhaltezustand vorgesehen, in dem der erste Haltepartner und der zweite Haltepartner relativ zueinander in der Vertikalrichtung nicht beweglich sind. Der Niederhaltezustand kann auch als Montagezustand bezeichnet sein. Vorzugsweise sind die Haltepartner sowie gegebenenfalls ein Verbindungskörper aufeinander abgestimmt, insbesondere formabgestimmt, um in einem Niederhaltezustand eine Vertikalbeweglichkeit der am ersten Haltepartner befestigten Fensterbank relativ zu dem Fensterbanklager, welches mit dem zweiten Haltepartner befestigt ist, zu unterbinden, jedoch eine, vorzugsweise translatorische, Beweglichkeit in einer anderen Richtung als der Vertikalrichtung, beispielsweise einer Tiefen Richtung, zuzulassen. Vorzugsweise kann der erste Haltepartner relativ zu dem zweiten Haltepartner translatorisch beweglich sein, insbesondere entsprechend der Tiefenrichtung der Fensterbank bzw. des Fensterbanklagers, insbesondere sowohl in einem Niederhaltezustand als auch in einem gelösten Zustand. Vorzugsweise ist der erste Haltepartner dazu ausgelegt und eingerichtet, in einem Montagezustand, in dem der erste Haltepartner an der Fensterbank und der zweite Haltepartner an dem Fensterbanklager befestigt ist, entsprechend einer durch das Fensterbanklager definierten Fensterbank-Einschubrichtung, vorzugsweise translatorisch, relativ zu dem zweiten Haltepartner beweglich zu sein.

Erfindungsgemäß ist vorgesehen, dass der erste Haltepartner an einer flächigen Unterseite der Fensterbank befestigt oder befestigbar ist, und/oder dass der zweite Haltepartner an einer flächigen Oberseite des Fensterbanklagers befestigt oder befestigbar ist. Eine flächige Unterseite oder Oberseite kann durch eine im Wesentlichen zweidimensionale Fläche gebildet sein. Die flächige Unterseite oder die flächige Oberseite ist vorzugsweise als eine ebene Fläche realisiert. Die vorzugsweise ebene Fläche, welche die Unterseite oder die Oberseite bildet, hat eine Tiefenerstreckung und quer zur tiefen Erstreckung eine Breitenerstreckung. Die Tiefenerstreckung und die Breitenerstreckung spannen die vorzugsweise ebene Fläche auf, welche die flächige Unterseite oder die flächige Oberseite bildet. Die flächige Unterseite einer Fensterbank, beispielsweise einer Blechfensterbank oder einer Steinfensterbank, kann als im Wesentlichen ebene und/oder plane Fläche betrachtet werden, soweit übliche Fertigungstoleranzen eingehalten sind. Die flächige Oberseite eines Fensterbanklagers kann als im Wesentlichen ebene und/oder plane Fläche betrachtet werden, soweit übliche Fertigungstoleranzen eingehalten sind, wobei insbesondere denkbar ist, dass die Fertigungstoleranzen des Fensterbanklagers gröber sind als die der Fensterbank. Ein flächiger Abschnitt der Unterseite oder der Oberseite kann im vorzugsweise gebildet sein durch eine zusammenhängende ebene Fläche mit einer Größe von wenigstens 2 cm², insbesondere wenigstens 4 cm², vorzugsweise wenigstens 10 cm².

Überraschenderweise hat sich gezeigt, dass der im Vergleich zu konventionellen Niederhaltersystemen komplexere Aufbau der erfindungsgemäßen Niederhalteanordnung bei wirtschaftlicher Gesamtbetrachtung im Hinblick auf Bau- und insbesondere Sanierungsarbeiten mit erheblichem Einsparpotenzial hinsichtlich des Demontage-, Wartungs- und Reparaturaufwands bei geringem Erstmontageaufwand einhergeht. Die erfindungsgemäße Niederhalteanordnung gewährleistet eine wirksame und verlässliche Sicherung für eine Fensterbank gegen ein An- oder Abheben durch Wind oder Sog.

Bei einer zweckmäßigen Ausführungsform einer Niederhalteanordnung sind der erste Haltepartner und der zweite Haltepartner dazu ausgelegt und eingerichtet, insbesondere derart aufeinander abgestimmt, in einem Montagezustand eine, insbesondere in der Vertikalrichtung, formschlüssige und/oder kraftschlüssige Verbindung mit einander einzugehen und in einem Loszustand relativ zueinander, insbesondere in einer ersten Horizontalrichtung, beweglich, vorzugsweise translatorisch beweglich, zu sein. Gemäß einer alternativen Ausführungsform mit zwei Haltepartnern und einem Verbindungskörper sind der erste Haltepartner, der zweite Haltepartner und der wenigstens eine Verbindungskörper dazu ausgelegt und eingerichtet, insbesondere derart aufeinander abgestimmt, in einem Montagezustand eine, insbesondere in der Vertikalrichtung, formschlüssige und/oder kraftschlüssige Verbindung mit einander einzugehen und in einem Loszustand relativ zueinander, insbesondere in einer ersten Horizontalrichtung, beweglich, vorzugsweise translatorisch beweglich zu sein. Vorzugsweise ist in dem Loszustand eine Beweglichkeit der Haltepartner relativ zueinander in der Vertikalrichtung verhindert. Darüber hinaus kann die Niederhalteanordnung in einem gelösten Zustand vorliegen, in dem der erste Niederhalter und der zweite halte relativ zueinander frei beweglich sind, wobei insbesondere bereits in dem gelösten Zustand die Haltemittel mit der Fensterbank und/oder dem Fensterbanklager fest verbunden sein können. Eine kraftschlüssige Verbindung kann beispielsweise mittels Magnetkraft realisiert sein. Eine formschlüssige Verbindung kann beispielsweise mittels einer Schwalbenschwanzführung realisiert sein. Eine kraft- und formschlüssige Verbindung kann beispielsweise realisiert sein durch einen Klettverschluss oder einen Druckknopf. Es ist denkbar, dass die Niederhalteanordnung durch die Betätigung eines Verbindungskörpers und/oder eines Trennmittels von dem Loszustand den Montagezustand für verbringbar ist und umgekehrt. Alternativ ist denkbar, dass eine aus zwei Haltepartnern zusammengesetzte Niederhalteanordnung sich simultan in dem Montagezustand und dem Loszustand befindet, wobei eine mittelbare Arretierung der Haltepartner zueinander durch eine Befestigung der Fensterbank beispielsweise an einem Fenster oder der Zarge, etwa durch verschrauben, die Beweglichkeit der Fensterbank relativ zu dem Fensterbanklager und damit die Beweglichkeit der Haltepartner relativ zueinander, insbesondere in der ersten Horizontalrichtung, blockiert.

Gemäß einer Weiterbildung einer Niederhalteanordnung sind der erste Haltepartner und der zweite Haltepartner derart aufeinander abgestimmt, dass die Verbindung, vorzugsweise die Verbindung der Haltepartner in der Vertikalrichtung, lösbar ist, insbesondere beschädigungsfrei lösbar, vorzugsweise durch eine translatorische Bewegung des ersten Haltepartners relativ zu dem zweiten Haltepartner in einer ersten Horizontalrichtung, vorzugsweise der Tiefenrichtung bzw. einer zu einer Fensterbank-Einschubrichtung des Fensterbanklagers korrespondierenden Richtung. Eine derartige Ausgestaltung hat den Vorteil, dass die Demontage der Fensterbank unbeeinträchtigt durch die Niederhalteanordnung erfolgen kann, ohne Einbußen bei der Sicherung der Fensterbank gegen Wind- und/oder Sogbelastung in Kauf nehmen zu brauchen. Die Niederhalteanordnung vermag die Fensterbank Entgegensog oder ähnliche Lasten sicher an der Zarge zu fixieren, wobei unbeschadet dessen eine einfache Einschubmontage der Fensterbank mit der erfindungsgemäßen Niederhalteanordnung möglich ist.

Bei einer Ausführungsform einer Niederhalteanordnung ist der erste Haltepartner und/oder der zweite Haltepartner vollständig in Vertikalrichtung zwischen der Fensterbank und dem sich in einer ersten Horizontalrichtung und einer zweiten Horizontalrichtung erstreckenden Fensterbanklager angeordnet oder anzuordnen. Vorzugsweise entspricht die erste Horizontalrichtung der Tiefenrichtung (von der Gebäudeaußenseite zur Gebäudeinnenseite) und die zweite Horizontalrichtung der Längsrichtung (korrespondierend zur Fensterbreite).

Gemäß einer Ausführungsform einer Niederhalteanordnung umfasst die formschlüssig ausgeführte Verbindung wenigstens einen in der ersten Horizontalrichtung hervorstehende Haken am ersten oder zweiten Haltepartner und eine dazu korrespondierende Hakenaufnahme im zweiten oder ersten Haltepartner. Der Haken können beispielsweise gebildet sein durch eine in der ersten Horizontalrichtung hervorstehende Nase eines Haltepartners, die in eine formangepasste Nasenaufnahme des anderen Haltepartners einführbar ist, um eine Vertikalbeweglichkeit der Haltepartner relativ zueinander, quer zur der Nase, zu unterbinden. Alternativ oder zusätzlich umfasst eine Niederhalteanordnung wenigstens einen in einer zweiten Horizontalrichtung hervorstehenden Vorsprung am ersten oder zweiten Haltepartner, insbesondere zwei gegenüberliegende Vorsprünge, und dazu korrespondierende Rücksprünge in dem anderen, zweiten oder ersten Haltepartner. In der zweiten Horizontalrichtung gegenüberliegende Vorsprünge können beispielsweise realisiert sein durch keilförmige Vorsprünge eines trapezförmigen Schlittens einer schwalbenschwanz-artigen Führung. Die formschlüssige Verbindung kann alternativ realisiert sein durch einen Scheibenkopf-förmigen oder Pilzkopf-förmigen Bestandteil eines Haltepartners und eine entsprechende Aufnahme des anderen Haltepartners, beispielsweise mit Laufnuten, wobei der Scheiben- oder Pilz-Kopf-förmigen Bestandteil sowohl einen Haken in der ersten Horizontalrichtung als auch Vorsprünge in der zweiten Horizontalrichtung realisiert. Es kann vorgesehen sein, dass sich der erste Haltepartner und/oder der zweite Haltepartner, insbesondere der Haken oder der Bestandteil, in der translatorischen Bewegungsrichtung keilförmig verjüngt. Alternativ oder zusätzlich kann vorgesehen sein, dass die Hakenaufnahme oder die Aufnahme in der translatorischen Bewegungsrichtung trichterartig verjüngt. Durch die Verjüngung oder Verjüngungen kann eine nicht ideal fluchtende Ausrichtung der Haltepartner relativ zu einander, beispielsweise infolge von Montagetoleranzen, kompensiert werden. Eine solche Niederhalteanordnung kann kostengünstig in großen Mengen produziert und einfach gehandhabt werden und eignet sich gut als Sicherung gegen Sog und Wind.

Gemäß einer Ausführungsform umfasst die Niederhalteanordnung ferner wenigstens einen Verbindungskörper, wie einen Splint, eine Klammer, einen Stift, einen beidseitig trapezförmiger in Nutenstein oder dergleichen. Die Niederhalteanordnung umfasst wenigstens eine im ersten Haltepartner gebildete erste Aufnahme zum teilweisen Aufnehmen des Verbindungskörpers und wenigstens eine im zweiten Haltepartner gebildete zweite Aufnahme zum teilweisen Aufnehmen des Verbindungskörpers. Der Verbindungskörper dient als Bindeglied zwischen dem ersten Haltepartner und dem zweiten Haltepartner, welche bei dieser Ausführungsform gegebenenfalls keine unmittelbare kraft- oder formschlüssige Verbindung miteinander eingehen. Vorzugsweise ist die erste Aufnahme und/oder die zweite Aufnahme formkomplementär zu dem Verbindungskörper, insbesondere zur Ausbildung einer formschlüssigen Verbindung des Verbindungskörpers mit dem ersten und/oder dem zweiten Haltepartner. Optional kann der Verbindungskörper mit einem oder beiden Haltepartner (ausschließlich) kraftschlüssig verbunden sein. Alternativ oder zusätzlich ist der wenigstens eine Verbindungskörper translatorisch, vorzugsweise in der ersten Horizontalrichtung und/oder der zweiten Horizontalrichtung, in die erste Aufnahme und/oder die zweite Aufnahme einsetzbar oder eingesetzt.

Eine Niederhalteanordnung kann gemäß einer Ausführungsform kraftschlüssig ausgeführt sein und wenigstens eine Magnetverbindung und/oder wenigstens eine Klettverbindung umfassen. Die entgegengesetzten Pole der Magnetverbindung oder miteinander kooperierenden Schlaufen und Haken der Klettverbindung sind vorzugsweise an beiden unterschiedlichen Haltepartnern vorgesehen. Beispielsweise kann der erste Haltepartner mit Schlaufen eine Klettverbindung und der zweite Haltepartner mit Haken der Klettverbindung ausgestattet sein, oder umgekehrt.

Bei einer Ausführungsform umfasst eine Niederhalteanordnung ferner wenigstens ein Trennmittel, wie ein Keil und/oder ein Trennschlitten. Das Trennmittel ist relativ zum ersten Haltepartner und/oder relativ zum zweiten Haltepartner beweglich. Das Trennmittel ist dazu ausgelegt und eingerichtet, die, insbesondere Kraft schlüssige, Verbindung mittels einer Relativbewegung bezüglich des ersten und/oder zweiten Haltepartners zu schwächen oder zu trennen. Beispielsweise kann das Trennmittel als Trennschlitten mit wenigstens einem Keil realisiert sein und dazu ausgelegt sein, die Verbindung miteinander kooperierender Schlaufen und Haken einer Klettverbindung aufzulösen, sodass die Haltepartner voneinander entfernbar sind. Ein Trennmittel kann auch dazu dienen, einen Haftkontakt miteinander kooperierender Magneten zu lösen, indem das Trennmittel einen Berührkontakt zweier Magneten unterbricht und/oder dem Abstand zweier Magneten erhöht, um die magnetische Haftkraft, welche die Haltepartner aneinander hält, zu verringern oder aufzuheben.

Bei einer weiteren Ausführungsform eine Niederhalteanordnung ist vorgesehen, dass die Tiefe der Niederhalteanordnung in der ersten Horizontalrichtung und/oder die Breite der Niederhalteanordnung in der zweiten Horizontalrichtung größer ist als die Höhe der Niederhalteanordnung in der Vertikalrichtung. Es sei klar, dass mit der Tiefe, Breite bzw. Höhe der Niederhalteanordnung deren Dimensionen in einem betriebsgemäßen Einbauzustand betreffen. Insbesondere vorgesehen sein, dass die Tiefe und/oder die Breite wenigstens 5 mal oder wenigstens 10 mal größer ist als die Höhe der Niederhalteanordnung. Es kann beispielsweise vorgesehen sein, dass die Niederhalteanordnung, d. h. der erste Haltepartner und/oder der zweite Haltepartner, eine Breite im Bereich von 10 mm bis 50 mm, insbesondere etwa 30 mm aufweisen kann. Ferner kann beispielsweise vorgesehen sein, dass die Niederhalteanordnung, d. h. der erste Haltepartner und/oder der zweite Haltepartner, eine Länge im Bereich von 20 mm bis 200 mm, vorzugsweise 50 mm bis 100 mm, aufweisen kann. Alternativ oder zusätzlich kann bei einer Ausführungsform der Niederhalteanordnung vorgesehen sein, dass die Höhe der Niederhalteanordnung nicht mehr als 20 mm, insbesondere nicht mehr als 10 mm, vorzugsweise nicht mehr als 5 mm, beträgt. Alternativ oder zusätzlich kann vorgesehen sein, dass die Höhe der Niederhalteanordnung wenigstens 1 mm, insbesondere wenigstens 3 mm, vorzugsweise wenigstens 4 mm, beträgt. Kurz gesagt ist vorgesehen, dass die Niederhalteanordnung flach baut, um in einem schmalen Vertikalspalt zwischen der Fensterbank und der Zarge montierbar oder montiert zu sein. Insbesondere kann auf diese Weise gewährleistet werden, dass konventionelle Fensterbank-Einbaumaße auch bei Verwendung der neuartigen Niederhalteanordnung realisierbar sind.

Gemäß einer Ausführungsform einer Niederhalteanordnung ist der erste Haltepartner mit einer (ersten) Klebeverbindung an der flächigen Unterseite der Fensterbank befestigt oder befestigbar. Alternativ oder sich ist der zweite Haltepartner mit einer (zweiten) Klebeverbindung an der flächigen Oberseite des Fensterbanklagers befestigt oder befestigbar. Wie eingangs beschrieben, ist die unmittelbare Befestigung einer Fensterbank an einem Fensterbanklager mithilfe einer Klebeverbindung üblich. Die erfindungsgemäße Niederhalteanordnung kann unter Verwendung einer ersten und/oder zweiten Klebeverbindung zu Befestigung der Niederhalteanordnung an der Fensterbank und/oder dem Fensterbanklager einfach und mit nahezu denselben Arbeitsschritten montiert werden, wie im Stand der Technik üblich.

Bei einer Weiterbildung der Niederhalteanordnung ist vorgesehen, dass die Klebeverbindung als eine am ersten Haltepartner und/oder am zweiten Haltepartner vorgesehene Haftmittelschicht realisiert ist. Der Haltepartner kann an einer Kontaktseite, die dazu ausgelegt und eingerichtet ist an der flächigen Unterseite der Fensterbank oder der flächigen Oberseite des Fensterbanklagers befestigbar oder befestigt zu sein, mit einer Haftschicht, wie einer Selbstklebeschicht, versehen sein. Für die manuelle Montage des Haltepartners ist es dann nicht erforderlich, in einem zusätzlichen Montageschritt ein Haftmittel aufzutragen. Die Haftschicht an der jeweiligen Kontaktseite des ersten und/oder zweiten Haltepartners enthält vorzugsweise eine vorbestimmte Menge Haftmittel zur einfachen und sicheren Befestigung.

Bei einer alternativen Ausführungsform der Niederhalteanordnung ist der erste Haltepartner materialschlüssig und/oder integral mit der Fensterbank verbunden. Beispielsweise kann bei einer Blech-Fensterbank oder ähnlichem der erste Haltepartner an der Fensterbank angeschweißt oder angelötet sein. Bei einer Fensterbank, die vollständig oder zumindest teilweise in einem generativen Herstellungsverfahren hergestellt ist, beispielsweise einem Gussverfahren, kann die erste Halteanordnung einstückig mit der Fensterbank gebildet sein oder in das die Fensterbank bildende Gussmaterial eingebettet sein, insbesondere umspritzt, hinterspritzt, oder eingegossen. Der zweite Haltepartner kann, wie oben beschrieben, mit einer Klebeverbindung an der flächigen Oberseite des Fensterbanklager befestigbar oder befestigt sein.

Die Erfindung betrifft auch ein Kit of Parts, das eine Fensterbank und zumindest eine Niederhalteanordnung wie oben beschrieben umfasst. Die Fensterbank ist insbesondere eine profilartige Blech-Fensterbank. Die wenigstens eine Niederhalteanordnung oder zumindest wenigstens ein erster Haltepartner kann an der flächigen Unterseite der Fensterbank befestigt sein. Vorzugsweise ist an der flächigen Unterseite der Fensterbank, insbesondere der Profilartigen Blech-Fensterbank, eine Haftmittelschicht zum Befestigen wenigstens eines ersten Haltepartners vorgesehen. Beispielsweise kann an der flächigen Unterseite der Fensterbank zumindest abschnittsweise eine Haftmittelschicht aufgebracht sein, mittels welcher die Niederhalteanordnung an der flächigen Unterseite befestigbar oder befestigt ist. Das Kit of Parts kann optional zusätzliche Mengen wenigstens eines Haftmittels enthalten, welches zum Ausbilden von Klebeverbindungen zwischen dem zweiten Haltepartner und der flächigen Oberseite Fensterbanklagers und/oder zum Ausbilden von Klebeverbindungen zwischen dem ersten Haltepartner und der flächigen Unterseite der Fensterbank ausgelegt und eingerichtet ist.

Gemäß einer Weiterbildung umfasst das Kit of Parts ferner ein paar Gleitanschlüsse, die dazu ausgelegt und eingerichtet sind in Eckbereichen einer Fensterzarge einsetzbar zu sein, die einander in der zweiten Horizontalrichtung gegenüberliegen. Die Gleitanschlüsse sind ferner dazu ausgelegt und eingerichtet, die Fensterbank des Kit of Parts in der ersten Horizontalrichtung beweglich, insbesondere translationsbeweglich, aufzunehmen.

Die Erfindung betrifft auch eine Fensterzarge mit einem Fensterbanklager und einer in dem Fensterbanklager gehaltenen Fensterbank. Die Fensterzarge umfasst eine Niederhalteanordnung wie oben beschrieben, gegebenenfalls zwei oder mehr Niederhalteanordnungen wie oben beschrieben. Alternativ kann die Fensterzarge ein oder mehrere Kit of Parts wie oben beschrieben umfassen.

Bei einer besonderen Ausführungsform einer erfindungsgemäßen Fensterzarge ist vorgesehen, dass das Fensterbanklager ein Paar Gleitlager, insbesondere Gleitabschlüsse, umfasst, die sich an der Fensterzarge abstützen und zwischen denen sich die Fensterbank in der zweiten Horizontalrichtung profilartig erstreckt die wenigstens eine Niederhalteanordnung ist in der zweiten Horizontalrichtung beabstandet zu den Gleitlagern angeordnet. Zwischen den in der zweiten Horizontalrichtung gegenüberliegenden Gleitlagern könne mehrere Niederhalteanordnung in, insbesondere in vorzugsweise regelmäßigen Abständen angeordnet sein. Insbesondere sind die Gleitlager dazu ausgelegt und eingerichtet, die Fensterbank in der ersten Horizontalrichtung translatorisch aufzunehmen.

Die Erfindung betrifft auch eine Gebäudewand, wie eine Fertiggebäudewand, welche mindestens eine Niederhalteanordnung, mindestens ein Kit of Parts und/oder mindestens eine Fensterzarge umfasst, die bzw. das wie oben beschrieben ausgeführt ist, wobei die Gebäudewand mindestens eine mittels der mindestens einen Niederhalteanordnung an der Gebäudewand reversibel befestigte Fensterbank umfasst.

Die Erfindung betrifft außerdem eine Gebäudefassade die mindestens eine Niederhalteanordnung, mindestens ein Kit of Parts, mindestens eine Fensterzarge und/oder mindestens eine Gebäudewand umfasst, die bzw. das wie oben beschrieben ausgeführt ist. Die Gebäudefassade umfasst ferner mindestens ein Fenster mit einem Fensterrahmen, wobei die Fensterbank in der ersten Horizontalrichtung an dem Fensterrahmen befestigt, insbesondere festgeschraubt ist.

Weiterhin betrifft die Erfindung ein Gebäude mit mindestens einer Gebäudewand, einer Gebäudefassade, mindestens einer Niederhalteanordnung, mindestens einem Kit of Parts oder mindestens einer Fensterzarge, dass bzw. die wie oben beschrieben ausgeführt ist.

Die Erfindung betrifft auch die Verwendung einer Niederhalteanordnung zum Sichern einer Fensterbank gegen Wind- und/oder Sogbelastung.

Vorteilhafte Weiterbildungen sind in den abhängigen Ansprüchen angegeben. Weitere Eigenschaften, Merkmale und Vorteile der Erfindung werden durch die folgende Beschreibung einer bevorzugten Ausführungsform der Erfindung anhand der beiliegenden Zeichnung deutlich, in denen zeigen:
- Figur 1: eine schematische Querschnittsansicht durch eine Fensterzarge an der eine Fensterbank mittels einer erfindungsgemäßen Niederhalteanordnung befestigt ist;
- Figur 2: eine Explosionsdarstellung einer ersten Ausführungsform einer erfindungsgemäßen Niederhalteanordnung mit einer in Vertikalrichtung formschlüssigen Verbindung;
- Figur 3: eine Schnittdarstellung der Niederhalteanordnung gemäß Figur 2;
- Figur 4: eine Schnittdarstellung einer zweiten Ausführungsform einer erfindungsgemäßen Niederhalteanordnung mit einer formschlüssigen Verbindung in Form einer Schwalbenschwanzführung;
- Figur 5: eine Explosionsdarstellung einer dritten Ausführungsform einer erfindungsgemäßen Niederhalteanordnung mit einer Klettverbindung;
- Figur 6: eine Schnittdarstellung der Niederhalteanordnung gemäß Figur 5;
- Figur 7: eine Explosionsdarstellung einer vierten Ausführungsform einer erfindungsgemäßen Niederhalteanordnung mit einem Verbindungskörper;
- Figur 8: eine Explosionsdarstellung einer fünften Ausführungsform einer erfindungsgemäßen Niederhalteanordnung mit einem anderen Verbindungskörper; und
- Figur 9: eine Schnittdarstellung der Niederhalteanordnung gemäß Figur 5.

In der nachfolgenden Beschreibung bevorzugter Ausführungsformen der Erfindung anhand der beiliegenden Figuren werden für dieselben oder ähnliche Komponenten zur Vereinfachung der Lesbarkeit dieselben oder ähnliche Bezugszeichen verwendet.

Es sei klar, dass die im Folgenden anhand der Figuren exemplarisch dargestellte erfindungsgemäße Niederhalteanordnungen 1, erfindungsgemäße Fensterzarge, erfindungsgemäße Gebäudewand, erfindungsgemäße Gebäudefassade, und dass erfindungsgemäße Kit of Parts in der vorliegenden Offenbarung nur schematisch dargestellt und exemplarisch beschrieben werden. Im Rahmen der Offenbarung sind zahlreiche Variationen gegenüber den exemplarisch in den Figuren dargestellten bevorzugten Ausführungsformen denkbar.

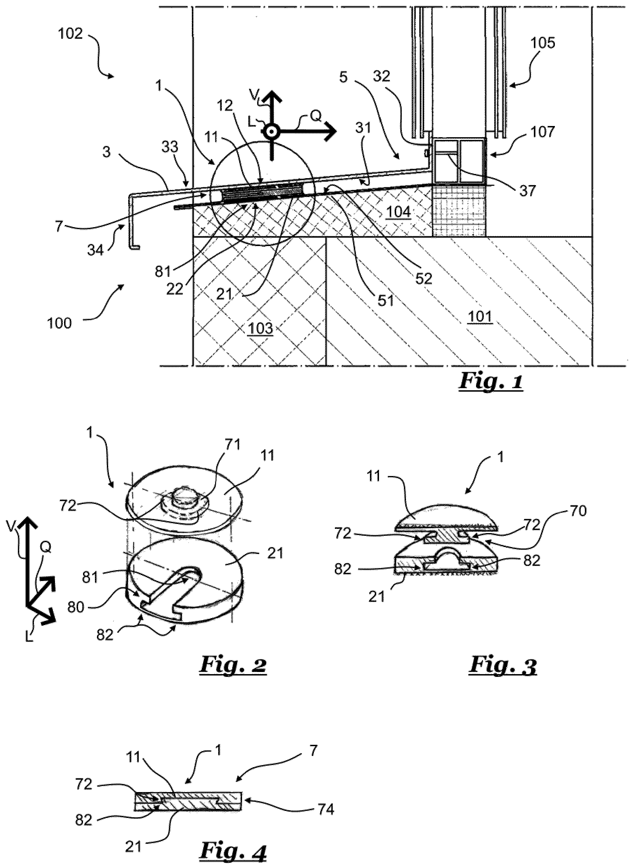

Figur 1 zeigt eine Querschnittsansicht durch eine erfindungsgemäße Fensterzarge 5 in einer erfindungsgemäßen Gebäudewand 100. Die Gebäudewand umfasst ein Mauerwerk 101 und einer daran gebäudeaußenseitig montierten WDVS Schicht 103. In einer Öffnung 102 der Gebäudewand 100 ist die Fensterzarge 5 angeordnet. Im Bereich der Fensterzarge 5 ist ein Fenster 105 eingesetzt, das einen Fensterrahmen 107 hat. Auf dem Mauerwerk 101 und der WDVS Schicht 103 ist in der Öffnung 102 eine Unterfensterbank 104 vorgesehen. Die Öffnung 102 erstreckt sich in einer ersten Horizontalrichtung Q, die als Tiefenrichtung oder Querrichtung bezeichnet sein kann, durch die Gebäudewand 100.

In Figur 1 ist eine Fensterbank 3 in Form einer Profilartigen Blech-Fensterbank dargestellt, die sich in der ersten Horizontalrichtung L erstreckt, die auch als Längsrichtung oder als Breitenrichtung bezeichnet sein kann. Bei der hier dargestellten Ausführungsform bildet die Unterfensterbank 104 die flächige Oberseite eines Fensterbanklagers 51. In der Vertikalrichtung V zwischen der Fensterbank 3 und der darunter angeordneten Unterfensterbank 104 ist die erfindungsgemäße Niederhalteanordnung 1 angeordnet, die nachfolgend im Detail beschrieben wird. Die Niederhalteanordnung 1 fixiert die Fensterbank 3 in der Vertikalrichtung V an der Fensterzarge 5 und sichert die Fensterbank 3 gegen Wind- und Sog-Wirkung, insbesondere entgegen einer Ablösung in der Vertikalrichtung V nach oben.

Die in Figur 1 dargestellte exemplarische Fensterbank 3 setzt sich zusammen aus einem sich in der Vertikalrichtung V nach oben erstreckenden Montageschenkel 32, einer sich in der ersten Horizontalrichtung Q erstreckenden Schirmplatte 33 und einem sich in der Vertikalrichtung V nach unten erstreckenden Abtropfschenkel 34. der Abtropfschenkel 34 und der Montageschenkel 32 sind an in der ersten Horizontalrichtung Q gegenüberliegenden Enden der Schirmplatte 33 angeordnet. Der Montageschenkel 32 ist dazu ausgelegt und eingerichtet, in einen flächigen Berührkontakt mit der Außenseite des Fensterrahmens 107 gebracht zu werden. Im Bereich des Montageschenkel 32 ist die Fensterbank 3 an dem Fensterrahmen 107 befestigt, bei der in Figur 1 dargestellten Ausführungsform mit einer Schraube 37. Die Schraube 37 fixiert die Fensterbank 3 in der ersten Horizontalrichtung Q ortsfest an dem Fenster 105.

Am gebäudeaußenseitigen Ende der Fensterbank 3 ist in einem Abstand zur gegebenenfalls verputzten Außenseite der Gebäudewand 100 und deren WDVS Schicht 103 der nach unten ragende Abtropfschenkel 34 vorgesehen. Mit dem Abtropfschenkel 34 wird sicher vermieden, dass entlang der Fensterbank 3 ablaufendes Wasser, insbesondere Regenwasser, selbst bei schräger bis horizontaler Windeinwirkung in die Gebäudewand 100 eindringt. Die Schirmplatte 33 der Fensterbank 3 bedeckt die Unterseite der Öffnung 102 in der Gebäudewand 101 flächig in der ersten Horizontalrichtung Q und in der zweiten Horizontalrichtung L. Die Schirmplatte 33 der Fensterbank 3 und erstreckt sich in der Längsrichtung L vollflächig von einem ersten Ende der Fensterzarge 5 zu deren gegenüberliegenden Ende. Die Wetterseite der Fensterbank 3 ist gebildet durch die Oberseite der Schirmplatte 33 und die gebäudeaußenseitigen Oberflächen des Montage Schenkels 32 und des Abtropfschenkel 34.

An der zur Oberseite in Vertikalrichtung V gegenüberliegenden Unterseite 31 der Fensterbank 3 ist, insbesondere im Bereich der Schirmplatte 33, vorzugsweise ausschließlich im Bereich der Schirmplatte 33, der obere, erste Haltepartner 11 der erfindungsgemäßen Niederhalteanordnung 1 befestigt. Vorzugsweise ist der erste Haltepartner 11 entgegen einer beliebigen Relativbewegung fixiert an der flächigen Unterseite 31 der Fensterbank 3 befestigt. Beispielsweise bei einer Blech-Fensterbank kann ein erster Haltepartner 11 aus Metall festgelötet oder geschweißt sein. Vorzugsweise ist der erste Haltepartner 11 an der flächigen Unterseite 31 durch eine Klebeverbindung befestigt. Abhängig von der Längserstreckung der Fensterbank 3 können mehrere, vorzugsweise baugleiche, Niederhalteanordnungen 1 vorgesehen sein, um die Fensterbank 3 an der Fensterzarge 5 zu befestigen.

Der zweite Haltepartner 21 der Niederhalteanordnung 1 ist an einer flächigen Oberseite 52 der Fensterzarge 5 befestigt. Vorzugsweise ist der zweite Haltepartner 21 entgegen einer beliebigen Relativbewegung fixiert an der flächigen Oberseite 52 der Fensterzarge 5 befestigt. Der zweite Haltepartner 21 ist an der Oberseite 52 der Fensterzarge 5 vorzugsweise mit einer Klebeverbindung befestigt.

Bei der in Figur 1 dargestellten Ausführungsform kooperieren der erste Haltepartner 11 und der zweite Haltepartner 21 um die Fensterbank 3 in dem abgebildeten Montagezustand in der Vertikalrichtung V ortsfest an der Fensterzarge 5 zu halten. Dabei können der erste Haltepartner 11 und der zweite Haltepartner 21 direkt oder mittelbar unter Zuhilfenahme eines (nicht näher dargestellten) Verbindungskörpers 9 miteinander kooperieren. Die Haltepartner 11, 21 realisieren eine vorzugsweise beschädigungsfrei lösbare Verbindung 7 zur Befestigung der Fensterbank 3 in der Gebäudeöffnung 102.

Die Verbindung 7 ist durch eine Relativbewegung des ersten Haltepartners 11 relativ zu dem zweiten Haltepartner 21 vorzugsweise in der ersten Horizontalrichtung Q lösbar. Ein Loszustand, in dem die Fensterbank 3 gemeinsam mit dem an ihr ortsfest fixierten ersten Haltepartner 11 aus der Gebäudeöffnung 102 entnommen werden kann, kann bei der hier abgebildeten bevorzugten Ausführungsform durch Lösen der Schraube 37 realisiert werden. Bei den nachfolgend im Detail beschriebenen Ausführungen verschiedene Niederhalteanordnung 1 anhand der Figuren 2 bis 4 ist eine in der Vertikalrichtung V formschlüssige Verbindung 7 der Haltepartner 11, 21 vorgesehen. Die in der Vertikalrichtung V formschlüssigen Verbindung 7 der Haltepartner 11, 21 realisieren eine Sicherung gegen ein Ablösen der Fensterbank 3 von der Zarge 5 in der Vertikalrichtung V, solange sich die Haltepartner 11, 21 in dem hier abgebildeten Montagezustand befinden, welcher durch die in der Vertikalrichtung V formschlüssigen Verbindung 7 auch als aktiver Sicherungszustand betrachtet werden kann. Die formschlüssigen Verbindung 7 hält im Montagezustand die Fensterbank 3 in der Vertikalrichtung V ortsfest an der Zarge 5.

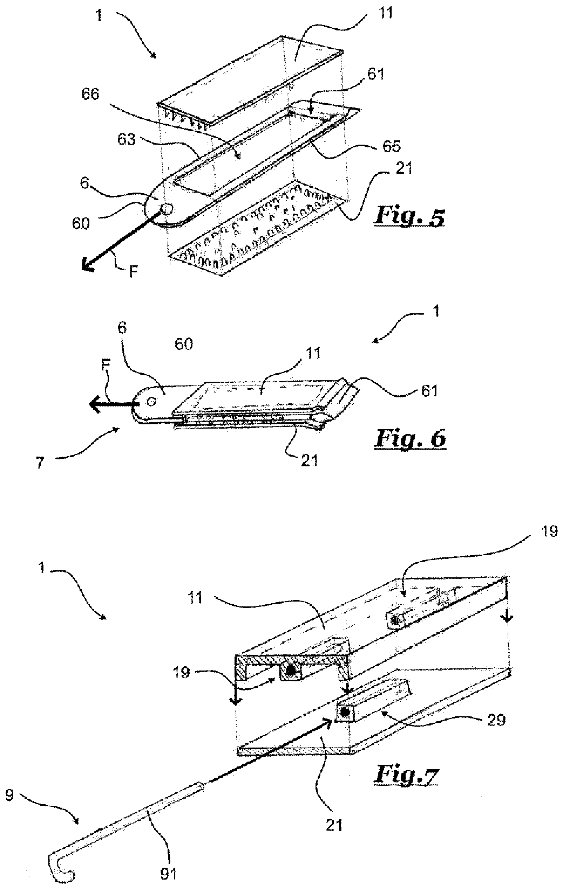

Bei manchen Ausführungsformen einer Niederhalteanordnung 1, wie den nachfolgend unter Bezugnahme auf die Figuren 5 bis 9 beschriebenen, kann die Verbindung 7 gelöst werden durch eine Relativbewegung des ersten Haltepartners 11 relativ zum zweiten Haltepartner 21 beispielsweise in der Vertikalrichtung V. Ein Ablösen der Fensterbank 3 von der Zarge 5 in der Vertikalrichtung V bedarf jedoch zunächst der Überwindung einer Sicherung, welche gewährleistet, dass eine unbeabsichtigte Ablösung der Vertikalrichtung durch Einwirkung eines Aufwindes oder Sogs sicher vermieden wird. Eine solche Sicherung kann beispielsweise in Form eines nachfolgend beschriebenen Trennmittels 6 und/oder Verbindungskörpers 9 realisiert sein. Solange die Sicherung sich in einem aktiven Sicherungszustand befindet, sind auch bei diesen Ausführungsformen der erste Haltepartner 11 an dem zweiten Haltepartner 21 in der Vertikalrichtung V ortsfest an einander gehalten. Erst wenn die Sicherung in einen passiven Sicherungszustand verbracht ist, ist eine Bewegung der Haltepartner 11, 21 relativ zueinander in der Vertikalrichtung gestattet.

Die Figuren 2 und 3 zeigen erste erfindungsgemäße Ausführung einer Niederhalteanordnung 1 zum Sichern einer Fensterbank 3 entgegen einem Abheben in Vertikalrichtung V von einer Fensterzarge 5. Die Niederhalteanordnung 1 umfasst einen ersten Haltepartner 11 und einen zweiten Haltepartner 21. Der erste Haltepartner 11 umfasst einen Pilzkopf 70. Der zweite Haltepartner 21 weist Laufnuten 80 auf. Der Pilzkopf 70 und die Laufnuten 80 sind formkomplementär auf einander abgestimmt. In dem in Figur 2 und 3 dargestellten gelösten Zustand der Niederhalteanordnung 1 befindet sich der Pilzkopf 70 außerhalb der Laufnuten 80. Der Pilzkopf 70 ist in einer Horizontalrichtung Q, L translatorisch in die Laufnuten 80 einführbar. Wenn der Pilzkopf 70 in den Laufnuten 80 sitzt, sind die Haltepartner 11, 21 in der Vertikalrichtung V formschlüssig aneinander ortsfest gehalten. Hinsichtlich der ersten Horizontalrichtung Q steht ein Abschnitt des Pilzkopf 70 als Haken 71 des ersten Haltepartners 11 hervor und greift in eine formkomplementären Hakenaufnahme 81 des zweiten Haltepartners ein. Hinsichtlich der zweiten Horizontalrichtung L stehen zwei gegenüberliegende Abschnitte des Pilzkopfs 70 als Vorsprünge 72 hervor und greifen jeweils in einen formkomplementären Rücksprung 82 des zweiten Haltepartners 21 ein.

Figur 4 zeigt eine andere Ausführungsform eines Niederhalters 1, bei dem eine in Horizontalrichtung Q oder L translationsbewegliche und in der Vertikalrichtung V formschlüssige Verbindung 7 des Niederhalters 1 realisiert ist durch einen Formschluss nach Art einer Schwalbenschwanzführung 74. An dem zweiten Haltepartner 21 sind in der zweiten Horizontalrichtung L gegenüberliegende Vorsprünge 72 vorgesehen, die in formkomplementäre Rücksprünge 82 des ersten Haltepartners 11 eingreifen.

Figur 5 und 6 zeigen eine weitere Ausführungsform eines Niederhalters 1. Der erste Haltepartner 11 und der zweite Haltepartner 21 sind dazu ausgelegt, nach dem Prinzip eines Klettverschlusses mit einander zu kooperieren. Beispielsweise kann der erste Haltepartner 11 mit einer Haken aufweisenden Haftfläche und der zweite Haltepartner 21 mit einer Schlaufen aufweisenden Haftfläche realisiert sein. In einem Montagezustand (Fig. 6) hält die klettverschlussartige Verbindung 7 die Haltepartner 11, 21 zusammen. Zum Demontieren des Niederhalters ist als Trennmittel 6 ein Trennschlitten 63 bereitgestellt, der im Bereich der Haken und der Schlaufen angeordnet ist. Der Trennschlitten 63 hat einen Rahmen 65, der ein Verbindungsfenster 66 umgibt. Durch das Verbindungsfenster 66 ragen die Haken und Schlaufen im Montagezustand hindurch, um miteinander zu kooperieren und eine Verbindung 7 zu bilden, die eine Fensterbank 3 an einer Fensterzarge sichert. Der Trennschlitten 63 hat an seiner Vorderseite eine Lasche 60 und gegenüber zur Lasche 60 einen Keil 61. Zwei gegenüberliegende Streben verbinden die Lasche 60 mit dem Keil 61. Die Streben bilden zusammen mit der Lasche 60 und dem Keil 61 den Rahmen 65.

Um die Haltepartner von einander zu lösen, wird das Trennmittel 6 in einer Abzugsrichtung F bewegt, beispielsweise indem an der Lasche 60 gezogen wird. Durch die Bewegung in der Abzugsrichtung F, die vorzugsweise in der ersten Horizontalrichtung Q, insbesondere in Richtung einer Gebäudeaußenseite, drängt der Keil 61 des Trennmittels 6 gegen die Haken und Schlaufen und löst diese von einander. Wenn hinreichend viele Haken und Schlaufen von einander gelöst sind, können die Haltepartner von einander vorzugsweise in der Vertikalrichtung V entfernt werden.

Figur 7 zeigt eine andere Ausführungsform einer Niederhalteanordnung mit einem Verbindungskörper 9, der hier exemplarisch in Form eines Stifts 91 dargestellt ist, welcher dazu ausgelegt ist, die Haltepartner 11, 21 durch eine Formschluss-Verbindung an einander zu befestigen. Figur 7 zeigt die Haltepartner 11, 21 und den Verbindungskörper 9 in einem gelösten Zustand. Die Haltepartner 11, 21 sind gebildet als rechteckige, plattenartige Körper, an deren auf einander zu weisenden Seiten Aufnahmen 19, 29 zum formkomplementären Aufnehmen des Stifts 91 vorgesehen sind. Die Aufnahmen 19, 29 sind realisiert als in der Vertikalrichtung V vorstehende Abschnitte mit einer sich in einer Horizontalrichtung erstreckenden Durchgangsöffnung zum Aufnehmen des Verbindungskörpers 9.Der Stift 91 ist transversal in die als Bohrungen ausgeführten Aufnahmen 19, 29 einschiebbar oder draus herausziehbar. Der erste Haltepartner 11 hat zwei fluchtend in einem transversalen Abstand zu einander angeordnete Aufnahmen 19. Der zweite Haltepartner 21 hat eine Aufnahme 29, deren Länge an den Abstand zwischen den Aufnahmen 19 des ersten Haltepartners 11 angepasst ist. Wenn die Haltepartner 11, 21 zusammengefügt sind, fluchten alle Aufnahmen 19, 29 mit einander, sodass der Stift 91 hereingleiten kann. Es ist denkbar, dass eine oder mehrere Aufnahmen 19, 29 mit einer Einfädelhilfe für den Stift 91 ausgestattet ist, beispielsweise einem konischen Abschnitt, um das Einführen des Stifts 91 zu erleichtern. Wenn der Stift 91 in den Aufnahmen 19 und 29 beider Haltepartner 11, 21 sitzt, sind ist eine formschlüssige Verbindung geschaffen. Um die Haltepartner 11, 21 von einander zu lösen, wird der Stift 91 zunächst aus den Aufnahmen 19, 29 herausgezogen. Eine Öse am Ende des Stiftes 91 dient der einfacheren Handhabbarkeit.

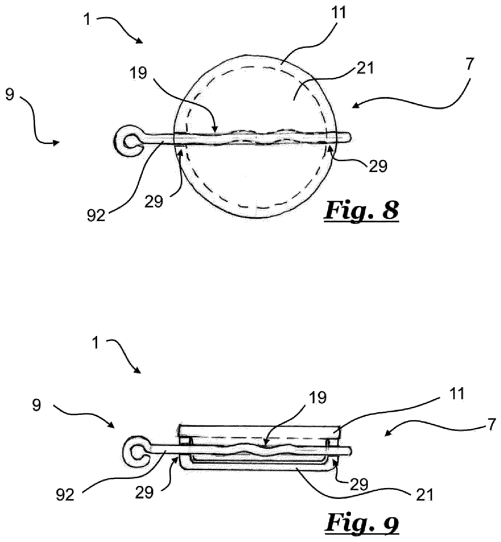

Die Figuren 8 und 9 zeigen eine andere Ausführungsform einer Niederhalteanordnung 1 mit einem Verbindungskörper 9. Die Ausführungsform der Niederhaltung 1 gemäß der Figuren 8 und 9 entspricht im Wesentlichen der zuvor bezüglich Figur 7 beschrieben Ausführungsform. Der Verbindungskörper ist hier als Splint 92 realisiert, welcher keine geradlinige, zylindrische Stiftform hat. Stattdessen weist der Splint 92 zur Arretierung eine Wellenbiegung auf. Die Wellenbiegung erhöht die Widerstandsfähigkeit gegen ein unbeabsichtigtes Ablösen des Splints aus den Aufnahmen 19, 29.

Die in den Figuren 8 und 9 dargestellte Niederhalteanordnung hat eine zylindrische oder knopfartige Gestalt. Der zweite Haltepartner 21 ist zum Aufnehmen des ersten Haltepartners 11 in der Vertikalrichtung ausgelegt. Der zweite Haltepartner 21 hat eine Topfform und der erste Haltepartner 11 eine dazu korrespondierende Zapfenform. Die Aufnahmen 19, 29 sind als eine den Zapfen 11 und den Topf 21 in Querrichtung durchdringende Durchgangsöffnung, beispielsweise eine Durchgangsbohrung, gebildet. Ähnlich wie zuvor bezüglich Figur 7 beschrieben, kann der Verbindungskörper 9, hier in Form eines Splints 92, in die Aufnahmen 19, 29 eingeschoben werden, um eine formschlüssige Verbindung mit den Haltepartnern 11, 21 zu bilden.

Als Verbindungskörper 9 können alternativ beispielsweis ein Federstecker, insbesondere nach DIN 11024, ein Scherungssplint, insbesondere nach DIN 94, oder ein anderer Körper vorgesehen sein, der dazu ausgelegt und eingerichtet ist, eine form- und/oder kraftschlüssige Verbindung mit Aufnahmen 19, 29 der Haltepartner 11, 21 zu realisieren. Es sei klar, dass die Aufnahmen 19, 29 vorzugsweise an den Verbindungskörper 9 formangepasst sind.

Die in der voranstehenden Beschreibung und den Ansprüchen offenbarten Merkmale der Erfindung können sowohl einzeln als auch in jeder beliebigen Kombination für die Verwirklichung der Erfindung in ihren verschiedenen Ausführungsformen wesentlich sein.

### Bezugszeichen:

- 1: Niederhalteanordnung
- 3: Fensterbank
- 5: Fensterzarge
- 6: Trennmittel
- 7: Verbindung
- 9: Verbindungskörper
- 11: erster Haltepartner
- 12,22: Klebeverbindung
- 9: Verbindungskörper
- 19: erste Aufnahme
- 21: zweiter Haltepartner
- 29: zweite Aufnahme
- 31: Unterseite
- 32: Montageschenkel
- 33: Abschirmplatte
- 34: Abtropfschenkel
- 37: Schraube
- 51: Fensterbanklager
- 52: Oberseite
- 60: Lasche
- 61: Keil
- 63: Trennschlitten
- 65: Rahmen
- 66: Fenster
- 70: Pilzkopf
- 71: Haken
- 72: Vorsprung
- 74: Schwalbenschanzführung
- 80: Laufnuten
- 81: Hakenaufnahme
- 82: Rücksprung
- 91: Stift
- 92: Splint
- 100: Gebäudewand
- 101: Mauerwerk
- 102: Öffnung
- 103: WDVS Schicht
- 104: Unterfensterbank
- 105: Fenster
- 107: Fensterrahmen

- b: Breite
- h: Höhe
- t: Tiefe
- F: Abzugsrichtung
- V: Vertikalrichtung
- Q: erste Horizontalrichtung
- L: zweite Horizontalrichtung

## Patentansprüche

1. Niederhalteanordnung (1) zum Sichern einer Fensterbank (3), insbesondere einer Blechfensterbank, einer Steinfensterbank oder dergleichen, an einem Fensterbanklager (51) einer Fensterzarge (5) gegen Wind- und/oder Sogbelastung, wobei die Niederhalteanordnung (1) einen ersten, an der Fensterbank (3) fixierbaren oder fixierten Haltepartner (11) und einen zweiten, an der Fensterzarge (5) fixierbaren oder fixierten Haltepartner (21) umfasst, wobei der erste Haltepartner (11) relativ zu dem zweiten Haltepartner (21) beweglich ist, **dadurch gekennzeichnet, dass**
der erste Haltepartner (11) an einer flächigen Unterseite (31) der Fensterbank (3) befestig oder befestigbar ist, und/oder, insbesondere und,
der zweite Haltepartner (21) an einer flächigen Oberseite (52) des Fensterbanklagers (51) befestigt oder befestigbar ist.

2. Niederhalteanordnung nach Anspruch 1, **dadurch gekennzeichnet, dass** der erste Haltepartner (11) und der zweite Haltepartner (21) dazu ausgelegt und eingerichtet sind, insbesondere derart auf einander abgestimmt, in einem Montagezustand eine, insbesondere in der Vertikalrichtung (V), formschlüssige und/oder, insbesondere und, kraftschlüssige Verbindung mit einander einzugehen und ein einem Loszustand relativ zu einander, insbesondere in einer ersten Horizontalrichtung (Q), beweglich, vorzugsweise translatorisch beweglich, zu sein.

3. Niederhalteanordnung nach Anspruch 2, wobei
der erste Haltepartner (11) und der zweite Haltepartner (21) derart auf einander abgestimmt sind, dass die Verbindung vorzugsweise beschädigungsfrei lösbar ist, vorzugsweise durch eine translatorische Bewegung des ersten Haltepartners (11) relativ zu dem zweiten Haltepartner (21) in einer ersten Horizontalrichtung (Q).

4. Niederhalteanordnung nach einem der vorstehenden Ansprüche, wobei die formschlüssig ausgeführte Verbindung (7) umfasst:
(i) wenigstens einen in der ersten Horizontalrichtung (Q) hervorstehenden Haken (71) am ersten oder zweiten Haltepartner (11, 21) und eine dazu korrespondierende Hakenaufnahme (81) im zweiten oder ersten Haltepartner (21, 11); und/oder, insbesondere und,
(ii) wenigstens einen in einer zweiten Horizontalrichtung (L) hervorstehenden Vorsprung (72) am ersten oder zweiten Haltepartner (11, 21) und einen dazu korrespondierenden Rücksprung (82) im zweiten oder ersten Haltepartner (21, 11), insbesondere zwei gegenüberliegende Vorsprünge und dazu korrespondierende Rücksprünge.

5. Niederhalteanordnung nach einem der vorstehenden Ansprüche, ferner umfassend
wenigstens einen Verbindungskörper (9), wie ein Stift (91), ein Splint (92), eine Klammer, ein beidseitig trapezförmiger Nutenstein oder dergleichen, wenigstens eine im ersten Haltepartner (11) gebildete erste Aufnahme (19) zum teilweisen Aufnehmen des Verbindungskörpers (9), und
wenigstens eine im zweiten Haltepartner (21) gebildete zweite Aufnahme (29) zum teilweisen Aufnehmen des Verbindungskörpers (9),
wobei vorzugsweise die erste Aufnahme (19) und/oder die zweite Aufnahme (29), insbesondere zur Ausbildung einer formschlüssigen Verbindung des Verbindungskörpers mit dem ersten und/oder zweiten Haltepartner (11, 21), formkomplementär zu dem Verbindungskörper (9) ist, und/oder, insbesondere und,
wobei der wenigstens eine Verbindungskörper (9) translatorisch in die erste Aufnahme (19) und/oder die zweite Aufnahme (29) einsetzbar oder eingesetzt ist.

6. Niederhalteanordnung nach einem der vorstehenden Ansprüche, wobei die Verbindung (7) kraftschlüssig ausgeführt ist und wenigstens eine Magnetverbindung und/oder wenigstens eine Klettverbindung umfasst.

7. Niederhalteanordnung nach einem der vorstehenden Ansprüche, ferner umfassend
wenigstens ein Trennmittel (6), wie ein Keil (61) und/oder ein Trennschlitten (63), das relativ zum ersten Haltepartner (11) und/oder zum zweiten Haltepartner (21) beweglich ist, und das dazu ausgelegt und eingerichtet ist, die, insbesondere kraftschlüssige, Verbindung (7) mittels einer Relativbewegung zum ersten und/oder zweiten Haltepartner (11, 21) zu schwächen oder trennen.

8. Niederhalteanordnung nach einem der vorstehenden Ansprüche, wobei die Tiefe (t) der Niederhalteanordnung (1) in der ersten Horizontalrichtung (Q) und/oder die Breite (b) der Niederhalteanordnung (1) in der zweiten Horizontalrichtung (L) größer ist als die Höhe (h) der Niederhalteanordnung in der Vertikalrichtung (V),
insbesondere wenigstens 5-mal oder wenigstens 10-mal größer; und/oder, insbesondere und,
wobei insbesondere die Höhe (h) der Niederhalteanordnung nicht mehr als 20 mm, insbesondere nicht mehr als 10 mm, vorzugsweise nicht mehr als 5 mm, und/oder wenigstens 1 mm, insbesondere wenigstens 3 mm, vorzugsweise wenigstens 4 mm, beträgt.

9. Niederhalteanordnung nach einem der vorigen Ansprüche, wobei der erste Haltepartner (11) mit einer Klebeverbindung (12) an der flächigen Unterseite (31) der Fensterbank (3) befestigt oder befestigbar ist und/oder, insbesondere und, wobei der zweite Haltepartner (21) mit einer Klebeverbindung (22) an der flächigen Oberseite (52) des Fensterbanklagers (51) befestigt oder befestigbar ist, wobei insbesondere die Klebeverbindung (12, 22) als eine am ersten Haltepartner (11) und/oder am zweiten Haltepartner (21) vorgesehene Haftmittelschicht realisiert ist.

10. Kit of Parts umfassend zumindest eine Niederhalteanordnung (1) nach einem der vorstehenden Ansprüche und eine Fensterbank (3), insbesondere eine profilartige Blech-Fensterbank, vorzugsweise mit einer an der flächigen Unterseite (31) der Fensterbank (3) vorgesehener Haftmittelschicht zum Befestigen wenigstens eines ersten Haltepartners (11).

11. Kit of Parts nach Anspruch 10, ferner umfassend
ein Paar Gleitanschlüsse, die dazu ausgelegt und eingerichtet sind, in in der zweiten Horizontalrichtung (L) gegenüberliegenden Eckbereichen einer Fensterzarge (5) einsetzbar zu sein und dazu, die Fensterbank (3) in der ersten Horizontalrichtung (Q) beweglich, insbesondere translationsbeweglich, aufzunehmen.

12. Fensterzarge (5) mit einem Fensterbanklager (51) und einer in dem Fensterbanklager (51) gehaltenen Fensterbank (3), **gekennzeichnet durch** wenigstens eine Niederhalteanordnung (1) nach einem der Ansprüche 1 bis 9 oder einem Kit of Parts nach Anspruch 10 oder 11, wobei insbesondere das Fensterbanklager (52) ein Paar Gleitlager, insbesondere Gleitabschlüsse, umfasst, die sich an der Fensterzarge (5) abstützen und, zwischen denen sich die Fensterbank (1) in der zweiten Horizontalrichtung (L) profilartig erstreckt, wobei die wenigstens eine Niederhalteanordnung (1) in der zweiten Horizontalrichtung beabstandet zu den Gleitlagern angeordnet ist,
wobei insbesondere die Gleitlager dazu ausgelegt und eingerichtet sind, die Fensterbank (3) in der ersten Horizontalrichtung (Q) translatorisch aufzunehmen.

13. Gebäudewand, enthaltend mindestens eine Niederhalteanordnung nach einem der Ansprüche 1 bis 9, mindestens ein Kit of Parts nach Anspruch 10 oder 11 oder mindestens eine Fensterzarge nach Anspruch 12, wobei mindestens eine Fensterbank (3) mittels der mindestens einen Niederhalteanordnung (1) an der Gebäudewand reversibel befestigt ist.

14. Verwendung einer Niederhalteanordnung (1) nach einem der Ansprüche 1 bis 9 zum Sichern einer Fensterbank (3) gegen Wind- und/oder Sogbelastung.

## Geänderte Patentansprüche

### Geänderte Patentansprüche gemäss Regel 137(2) EPÜ.

1. Kit of Parts umfassend zumindest eine Niederhalteanordnung (1) zum Sichern einer Fensterbank (3), insbesondere einer Blechfensterbank, einer Steinfensterbank oder dergleichen, an einem Fensterbanklager (51) einer Fensterzarge (5) gegen Wind- und/oder Sogbelastung,
wobei die Niederhalteanordnung (1) einen ersten, an der Fensterbank (3) fixierbaren oder fixierten Haltepartner (11) und einen zweiten, an der Fensterzarge (5) fixierbaren oder fixierten Haltepartner (21) umfasst, wobei der erste Haltepartner (11) relativ zu dem zweiten Haltepartner (21) beweglich ist, **dadurch gekennzeichnet, dass**
der erste Haltepartner (11) an einer flächigen Unterseite (31) der Fensterbank (3) befestig oder befestigbar ist, und/ oder, insbesondere und,
der zweite Haltepartner (21) an einer flächigen Oberseite (52) des Fensterbanklagers (51) befestigt oder befestigbar ist;
eine Fensterbank (3); und
Mengen wenigstens eines Haftmittels, welches zum Ausbilden von Klebeverbindungen zwischen dem zweiten Haltepartner und der flächigen Oberseite Fensterbanklagers und/oder zum Ausbilden von Klebeverbindungen zwischen dem ersten Haltepartner und der flächigen Unterseite der Fensterbank ausgelegt und eingerichtet ist.

2. Kit of Parts nach Anspruch 1, **dadurch gekennzeichnet, dass** der erste Haltepartner (11) und der zweite Haltepartner (21) dazu ausgelegt und eingerichtet sind, insbesondere derart auf einander abgestimmt, in einem Montagezustand eine, insbesondere in der Vertikalrichtung (V), formschlüssige und/oder, insbesondere und, kraftschlüssige Verbindung mit einander einzugehen und ein einem Loszustand relativ zu einander, insbesondere in einer ersten Horizontalrichtung (Q), beweglich, vorzugsweise translatorisch beweglich, zu sein.

3. Kit of Parts nach Anspruch 2, wobei
der erste Haltepartner (11) und der zweite Haltepartner (21) derart auf einander abgestimmt sind, dass die Verbindung vorzugsweise beschädigungsfrei lösbar ist, vorzugsweise durch eine translatorische Bewegung des ersten Haltepartners (11) relativ zu dem zweiten Haltepartner (21) in einer ersten Horizontalrichtung (Q).

4. Kit ofParts nach einem der vorstehenden Ansprüche, wobei die formschlüssig ausgeführte Verbindung (7) umfasst:
(i) wenigstens einen in der ersten Horizontalrichtung (Q) hervorstehenden Haken (71) am ersten oder zweiten Haltepartner (11, 21) und eine dazu korrespondierende Hakenaufnahme (81) im zweiten oder ersten Haltepartner (21, 11); und/oder, insbesondere und,
(ii) wenigstens einen in einer zweiten Horizontalrichtung (L) hervorstehenden Vorsprung (72) am ersten oder zweiten Haltepartner (11, 21) und einen dazu korrespondierenden Rücksprung (82) im zweiten oder ersten Haltepartner (21, 11), insbesondere zwei gegenüberliegende Vorsprünge und dazu korrespondierende Rücksprünge.

5. Kit of Parts nach einem der vorstehenden Ansprüche, ferner umfassend wenigstens einen Verbindungskörper (9), wie ein Stift (91), ein Splint (92), eine Klammer, ein beidseitig trapezförmiger Nutenstein oder dergleichen,
wenigstens eine im ersten Haltepartner (11) gebildete erste Aufnahme (19) zum teilweisen Aufnehmen des Verbindungskörpers (9), und
wenigstens eine im zweiten Haltepartner (21) gebildete zweite Aufnahme (29) zum teilweisen Aufnehmen des Verbindungskörpers (9),
wobei vorzugsweise die erste Aufnahme (19) und/oder die zweite Aufnahme (29), insbesondere zur Ausbildung einer formschlüssigen Verbindung des Verbindungskörpers mit dem ersten und/oder zweiten Haltepartner (11, 21), formkomplementär zu dem Verbindungskörper (9) ist, und/oder, insbesondere und,
wobei der wenigstens eine Verbindungskörper (9) translatorisch in die erste Aufnahme (19) und/oder die zweite Aufnahme (29) einsetzbar oder eingesetzt ist.

6. Kit of Parts nach einem der vorstehenden Ansprüche, wobei die Verbindung (7) kraftschlüssig ausgeführt ist und wenigstens eine Magnetverbindung und/ oder wenigstens eine Klettverbindung umfasst.

7. Kit of Parts nach einem der vorstehenden Ansprüche, ferner umfassend wenigstens ein Trennmittel (6), wie ein Keil (61) und/ oder ein Trennschlitten (63), das relativ zum ersten Haltepartner (11) und/oder zum zweiten Haltepartner (21) beweglich ist, und das dazu ausgelegt und eingerichtet ist, die, insbesondere kraftschlüssige, Verbindung (7) mittels einer Relativbewegung zum ersten und/oder zweiten Haltepartner (11, 21) zu schwächen oder trennen.

8. Kit of Parts nach einem der vorstehenden Ansprüche, wobei die Tiefe (t) der Niederhalteanordnung (1) in der ersten Horizontalrichtung (Q) und/oder die Breite (b) der Niederhalteanordnung (1) in der zweiten Horizontalrichtung (L) größer ist als die Höhe (h) der Niederhalteanordnung in der Vertikalrichtung (V),
insbesondere wenigstens 5-mal oder wenigstens 10-mal größer; und/oder, insbesondere und,
wobei insbesondere die Höhe (h) der Niederhalteanordnung nicht mehr als 20 mm, insbesondere nicht mehr als 10 mm, vorzugsweise nicht mehr als 5 mm, und/oder wenigstens 1 mm, insbesondere wenigstens 3 mm, vorzugsweise wenigstens 4 mm, beträgt.

9. Kit of Parts nach einem der vorstehenden Ansprüche, wobei der erste Haltepartner (11) mit einer Klebeverbindung (12) an der flächigen Unterseite (31) der Fensterbank (3) befestigt ist und/oder, insbesondere und, wobei der zweite Haltepartner (21) mit einer Klebeverbindung (22) an der flächigen Oberseite (52) des Fensterbanklagers (51) befestigt ist, wobei insbesondere die Klebeverbindung (12, 22) als eine am ersten Haltepartner (11) und/oder am zweiten Haltepartner (21) vorgesehene Haftmittelschicht realisiert ist.

10. Kit of Parts nach einem der vorstehenden Ansprüche und einer an der flächigen Unterseite (31) der Fensterbank (3) vorgesehenen Haftmittelschicht zum Befestigen wenigstens eines ersten Haltepartners (11).

11. Kit of Parts nach einem der vorstehenden Ansprüche, ferner umfassend ein Paar Gleitanschlüsse, die dazu ausgelegt und eingerichtet sind, in in der zweiten Horizontalrichtung (L) gegenüberliegenden Eckbereichen einer Fensterzarge (5) einsetzbar zu sein und dazu, die Fensterbank (3) in der ersten Horizontalrichtung (Q) beweglich, insbesondere translationsbeweglich, aufzunehmen.

12. Fensterzarge (5) mit einem Fensterbanklager (51) und einer in dem Fensterbanklager (51) gehaltenen Fensterbank (3), **gekennzeichnet durch** ein Kit of Parts nach einem der vorstehenden Ansprüche, wobei insbesondere das Fensterbanklager (52) ein Paar Gleitlager, insbesondere Gleitabschlüsse, umfasst, die sich an der Fensterzarge (5) abstützen und, zwischen denen sich die Fensterbank (1) in der zweiten Horizontalrichtung (L) profilartig erstreckt, wobei die wenigstens eine Niederhalteanordnung (1) in der zweiten Horizontalrichtung beabstandet zu den Gleitlagern angeordnet ist,
wobei insbesondere die Gleitlager dazu ausgelegt und eingerichtet sind, die Fensterbank (3) in der ersten Horizontalrichtung (Q) translatorisch aufzunehmen.

13. Gebäudewand, enthaltend mindestens ein Kit of Parts nach einem der Ansprüche 1 bis 11 oder mindestens eine Fensterzarge nach Anspruch 12, wobei mindestens eine Fensterbank (3) mittels der mindestens einen Niederhalteanordnung (1) an der Gebäudewand reversibel befestigt ist.

14. Verwendung eines Kit-of-Parts nach einem der Ansprüche 1 bis 11 zum Sichern der Fensterbank (3) gegen Wind- und/oder Sogbelastung.
